(19) Europäisches Patentamt
European Patent Office
Office européen des brevets

(11) **EP 3 270 239 A1**

(12) **EUROPEAN PATENT APPLICATION**
published in accordance with Art. 153(4) EPC

(43) Date of publication:
**17.01.2018 Bulletin 2018/03**

(51) Int Cl.:
***G05B 13/04*** *(2006.01)*  ***F24F 11/02*** *(0000.00)*
***G06N 99/00*** *(2010.01)*

(21) Application number: **16764610.8**

(22) Date of filing: **16.02.2016**

(86) International application number:
**PCT/JP2016/054401**

(87) International publication number:
**WO 2016/147780 (22.09.2016 Gazette 2016/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.03.2015 JP 2015051188**

(71) Applicants:
• **Kabushiki Kaisha Toshiba, Inc.**
**Tokyo 105-8001 (JP)**
• **Toshiba Infrastructure Systems & Solutions Corporation**
**Kawasaki-shi, Kanagawa 212-8585 (JP)**

(72) Inventors:
• **SAITO Masaaki**
**Tokyo 105-8001 (JP)**
• **MURAI Masahiko**
**Tokyo 105-8001 (JP)**
• **HANADA Yuuichi**
**Kawasaki-shi, Kanagawa 2128585 (JP)**
• **KUBO Yuuki**
**Kawasaki-shi, Kanagawa 2128585 (JP)**

(74) Representative: **Moreland, David**
**Marks & Clerk LLP**
**Aurora**
**120 Bothwell Street**
**Glasgow G2 7JS (GB)**

(54) **DEVICE CHARACTERISTIC MODEL LEARNING DEVICE, DEVICE CHARACTERISTIC MODEL LEARNING METHOD, AND STORAGE MEDIUM**

(57) An equipment characteristics model learning device includes an acquisition unit and a model coefficient deriving unit. The acquisition unit is configured to acquire actual values of variables which are used to express characteristics of equipment in a characteristics model indicating the characteristics. The model coefficient deriving unit is configured to derive a value of a coefficient of a simple characteristic model using the acquired actual values, wherein the simple characteristic model corresponds to a value range of a change factor variable which is a variable serving as a change factor for the characteristics among the variables of the characteristic model and indicates the characteristics using variables obtained by lowering the number of dimensions of the characteristic model.

FIG. 3

EP 3 270 239 A1

**Description**

[Technical Field]

Embodiments of the present invention relate to an equipment characteristics model learning device, an equipment characteristics model learning method, and a storage medium.

[Background Art]

Since the primary energy consumption in a heat source system may account for 20% to 30% of the energy consumption in a whole building, there is demand for promotion of energy saving. In order to promote energy saving in a heat source system, energy saving based on improvement in an operation method depending on moment to moment situations is also important as well as energy saving in single items of equipment such as improvement in efficiency. In such a background, research and development for optimization of operation of a heat source system has progressed.

For example, by using a characteristics model which is constructed by formulating the power characteristics of a heat source machine, an air-conditioner fan, or a pump constituting a heat source system, hot and cold water temperature target values for the heat source machine satisfying constraint conditions and minimizing the power required for the entire air conditioning may be calculated by a nonlinear or linear programming method. However, since actual equipment characteristics change depending on various conditions and deterioration, there is a likelihood that an optimum derived solution will not be secured without updating the characteristic model from time to time on the basis of the most recent situation. Since characteristics of a heat source machine change in a complicated manner depending on various conditions, technical skills are required for the modeling. Therefore, a user often takes out a maintenance contract with a manufacturer in order to reflect the most recent characteristics in the characteristic model from moment to moment. However, due to such a contract, there is a likelihood that a burden in costs will increase or a likelihood that energy saving will not be achieved due to malfunction during maintenance.

[Citation List]

[Patent Literature]

[Patent Literature 1]
Japanese Patent No. 5320128

[Summary of Invention]

[Technical Problem]

An object of the present invention is to provide an equipment characteristic model learning device, an equipment characteristic model learning method, and a storage medium that can simply and accurately acquire a model indicating characteristics of equipment.

[Solution to Problem]

An equipment characteristic model learning device according to an embodiment includes an acquisition unit and a model coefficient deriving unit. The acquisition unit is configured to acquire actual values of variables which are used to express characteristics of equipment in a characteristic model indicating the characteristics. The model coefficient deriving unit is configured to derive a value of a coefficient of a simple characteristic model using the acquired actual values, wherein the simple characteristic model corresponds to a value range of a change factor variable which is a variable serving as a change factor for the characteristics among the variables of the characteristic model and indicates the characteristics using variables obtained by lowering the number of dimensions of the characteristic model.

[Brief Description of Drawings]

Fig. 1 is a diagram illustrating a configuration of a monitoring and control system according to a first embodiment.
Fig. 2 is a diagram illustrating an equipment configuration example of a heat source system which is installed in a building according to the first embodiment.

Fig. 3 is a functional block diagram illustrating a configuration of a setting value calculating device according to the first embodiment.

Fig. 4 is a diagram illustrating an example of a data storage format in a data storage unit according to the first embodiment.

Fig. 5A is a diagram illustrating a characteristic model of a heat source machine constituting a heat source system which is a monitoring and control target of the monitoring and control system according to the first embodiment.

Fig. 5B is a diagram illustrating a characteristic model of a heat source machine constituting a heat source system which is a monitoring and control target of the monitoring and control system according to the first embodiment.

Fig. 5C is a diagram illustrating a characteristic model of a heat source machine constituting a heat source system which is a monitoring and control target of the monitoring and control system according to the first embodiment.

Fig. 5D is a diagram illustrating a characteristic model of a heat source machine constituting a heat source system which is a monitoring and control target of the monitoring and control system according to the first embodiment.

Fig. 6 is a diagram illustrating low-dimension images of a characteristic model according to the first embodiment.

Fig. 7 is a flowchart illustrating an operation flow of learning a model in the setting value calculating device according to the first embodiment.

Fig. 8 is a flowchart illustrating an operation flow of calculating a setting value in the setting value calculating device according to the first embodiment.

Fig. 9 is a functional block diagram illustrating a configuration of a setting value calculating device according to a second embodiment.

Fig. 10 is a flowchart illustrating an operation flow of learning a model in the setting value calculating device according to the second embodiment.

Fig. 11 is a diagram illustrating an example of a display screen of a model coefficient value derivation result according to the second embodiment.

Fig. 12 is a functional block diagram illustrating a configuration of a setting value calculating device according to a third embodiment.

Fig. 13 is a diagram illustrating an example of a data storage format in a data storage unit according to the third embodiment.

Fig. 14 is a flowchart illustrating an operation flow of learning a model in the setting value calculating device according to the third embodiment.

Fig. 15 is a flowchart illustrating an operation flow of calculating a setting value in the setting value calculating device according to the third embodiment.

[Description of Embodiments]

Hereinafter, an equipment characteristic model learning device, an equipment characteristic model learning method, and a storage medium according to embodiments will be described with reference to the accompanying drawings.

(First embodiment)

First, the outline of a first embodiment will be described.

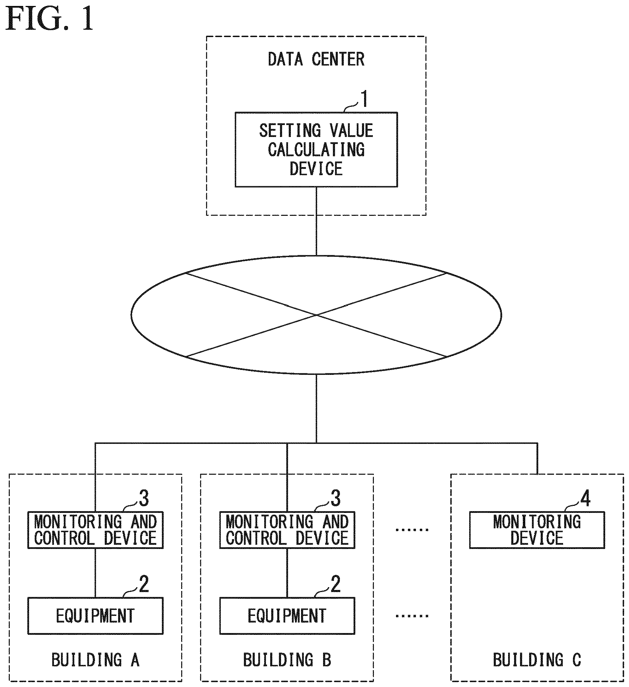

Fig. 1 is a diagram illustrating a configuration of a monitoring and control system according to this embodiment. Here, it is assumed that a monitoring and control target of the monitoring and control system is a heat source system. The monitoring and control system includes a setting value calculating device 1, equipments 2, monitoring and control devices 3, and a monitoring device 4. The setting value calculating device 1 is an example of an equipment characteristics model learning device. The setting value calculating device 1 is, for example, a cloud server which is mounted in a terminal device of a data center and manages heat source systems of a plurality of related buildings of a company. Each of building A and building B are provided with the equipment 2 and the monitoring and control device 3. The equipment 2 is constituent equipment of the heat source system. The monitoring and control device 3 monitors or controls a state of the equipment 2, other processes of the heat source system, and the like. In the drawing, one piece of equipment 2 is illustrated for each of building A and building B, but the heat source system installed in each building may include two or more pieces of equipment 2. Building C is, for example, an office building and is provided with the monitoring device 4. The monitoring and control device 3 and the monitoring device 4 can read at least a part of information of the monitoring and control device 3 in other buildings and can read calculation results of the setting value calculating device 1. This configuration is merely an example and does not limit installation types of the setting value calculating device 1. For example, a setting value calculating device 1 may be installed in each building or one or more monitoring and control devices 3 or monitoring devices 4 may have the function of the setting value calculating device 1.

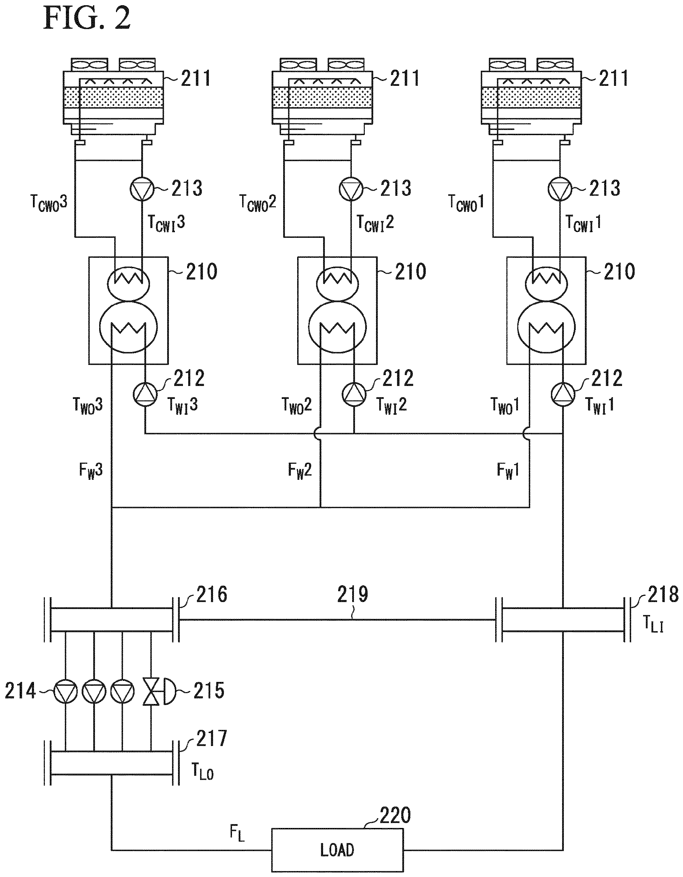

Fig. 2 is a diagram illustrating an example of an equipment configuration of a heat source system which is installed in a building. In the example illustrated in the drawing, the heat source system is a cold heat source system that supplies cold water for air conditioning or for cooling equipment. The heat source system illustrated in the drawing includes heat source machines 210, cooling towers 211, primary pumps 212, cooling water pumps 213, secondary pumps 214, a bypass valve 215, a primary supply header 216, a secondary supply header 217, a return header 218, a supply-return bypass passage 219, and a load 220.

Each heat source machine 210 generates cold water of a predetermined temperature which is supplied to the load 220. The load 220 includes an air conditioner or non-cooling equipment. A cooling water inlet temperature of the i-th heat source machine 210 is defined as $T_{CWI}^i$, a cooling water outlet temperature is defined as $T_{CWO}^i$, a cold water inlet temperature is defined as $T_{WI}^i$, a cold water outlet temperature is defined as $T_{WO}^i$, and a cold water flow rate is defined as $F_W^i$. The cooling tower 211 generates cold water of a predetermined temperature by changing the number of built-in fans operated to cool the heat source machine 210. The primary pump 212 feeds a predetermined amount of cold water to a primary circulation passage for cold water included in the heat source machine 210. The cooling water pump 213 feeds a predetermined amount of cooling water between the heat source machine 210 and the cooling tower 211. The secondary pump 214 feeds cold water in a secondary cold water circulation passage from the secondary supply header 217 to the return header 218 including the load 220 by changing the rotation speed thereof such that a cold water pressure of the secondary supply header 217 is maintained at a predetermined value. The bypass valve 215 causes cold water to flow from the secondary supply header 217 to the primary supply header 216 to prevent an increase in pressure in the secondary supply header 217, by increasing an opening level thereof when the pressure of the secondary supply header 217 increases. $T_{LO}$ denotes the cold water temperature of the secondary supply header 217 and $F_L$ denotes a cold water flow rate from the secondary supply header 217 to the load 220. Cold water corresponding to a difference between the cold water flow rate in the primary circulation passage and the cold water flow rate in the secondary circulation passage flows in the supply-return bypass passage 219. This cold water flows from the primary supply header 216 to the return header 218 when the cold water flow rate in the primary circulation passage is greater than the cold water flow rate in the secondary circulation passage, and flows from the return header 218 to the primary supply header 216 when the cold water flow rate in the secondary circulation passage is greater than the cold water flow rate in the primary circulation passage. $T_{LI}$ denotes a cold water temperature in the return header 218.

The equipment configuration and operation of the cold heat source system illustrated in Fig. 2 is merely an example and does not intend to limit a system which is a monitoring and control target of the monitoring and control system according to this embodiment or target equipment of the setting value calculating device 1.

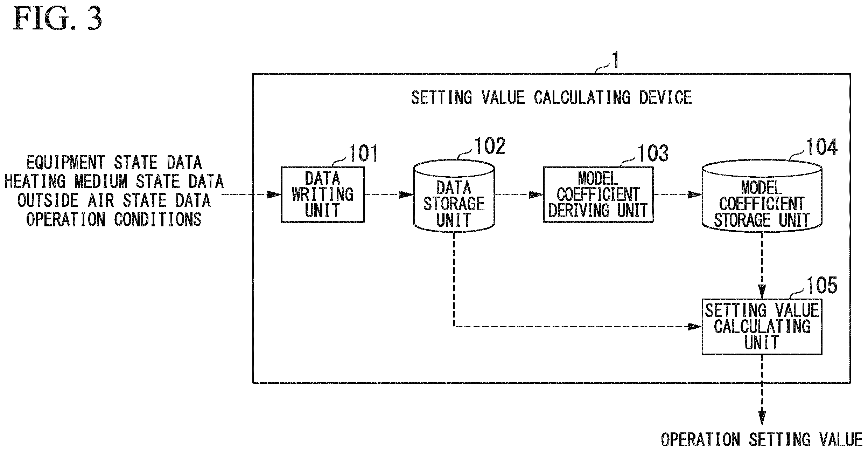

Fig. 3 is a functional block diagram illustrating a configuration of the setting value calculating device 1 and representatively illustrates only functional blocks associated with this embodiment. The setting value calculating device 1 includes a data writing unit 101, a data storage unit 102, a model coefficient deriving unit 103, a model coefficient storage unit 104, and a setting value calculating unit 105.

Results data associated with the heat source system and operation conditions are input to the setting value calculating device 1, and an operation setting value for decreasing a value of a desired index (an evaluation index value) is output from the setting value calculating device 1. An example of the desired index is energy consumption. Depending on the type of the index, the setting value calculating device 1 may output an operation setting value for increasing an evaluation index value. The operation setting value refers to a setting value which is used to control operation of the heat source system. Operation setting values may include an instruction to start or stop the equipment 2. The results data is data from which actual values of variables (parameters) which are used for a characteristic model expressing characteristics of the equipment 2 of the heat source system using an expression may be acquired. Examples of the results data include data indicating observation results such as equipment state data, heating medium state data, and outside air state data or information acquired from a part of this data.

The equipment state data is mainly a data group associated with the operation of the equipment 2. Examples of the equipment state data include data of a start/stop state of the equipment 2 constituting the heat source system, a temperature setting value and a flow rate of a heating medium, a processing heat quantity, a load factor, and power consumption. The heating medium is, for example, cold water. The heating medium state data is a data group associated with a heating medium state in each processing unit other than the equipment state data. Examples of the heating medium state data include a required heat quantity of cold water for the load 220, a cold water flow rate, a temperature of the return header 218, and information of a differential pressure setting between the primary supply header 216 and the secondary supply header 217. The outside air state data is data for defining an outside air state such as an outside air temperature, a relative humidity, or an outside air dew-point temperature. The operation conditions are information indicating all the conditions for calculating the setting values such as selection of a target function which is used to calculate the evaluation index value, upper and lower limit values of the operation setting value (for example, a cold water temperature setting value or a cooling water temperature setting value when the operation setting value is an operation setting value associated with the heat source machine 210), and whether to prohibit change between start and stop of the equipment 2.

The data writing unit 101 writes the equipment state data, the heating medium state data, and the outside air state data input to the setting value calculating device 1 as results data to the data storage unit 102. The data writing unit 101 writes the operation condition information input to the setting value calculating device 1 to the data storage unit 102. The data storage unit 102 stores the results data and the operation conditions.

The model coefficient deriving unit 103 calculates values of model coefficients (hereinafter referred to as "model coefficient values") in simple characteristic models of the equipment 2 of the heat source system using the results data acquired from the equipment state data, the heating medium state data, and the outside air state data from the past stored in the data storage unit 102. Accordingly, the model coefficient deriving unit 103 also operates as an acquisition unit that acquires actual values of variables which are used for a characteristic model on the basis of data indicating observation results. A simple characteristic model is an expression in which the number of dimensions of variables in an expression indicating the characteristics of the equipment 2 is set to be less than that in the characteristic model, generated from the characteristic model on the basis of a value of a variable serving as a change factor for equipment characteristics (hereinafter referred to as a "change factor variable") among the variables which are used for the characteristic model. That is, the characteristic model is expressed by a set of simple characteristic models corresponding to ranges of the value of the change factor variable. A model coefficient is a coefficient which is used for an expression of a simple characteristic model. The expression of the simple characteristic model is given in advance other than the model coefficient values. The model coefficient storage unit 104 stores the model coefficient values of the simple characteristic models which are calculated by the model coefficient deriving unit 103.

The setting value calculating unit 105 determines an operation setting value of the equipment 2 on the basis of the operation conditions read from the data storage unit 102 and the simple characteristic models to which the model coefficient values read from the model coefficient storage unit 104 are applied. Specifically, the setting value calculating unit 105 determines the operation setting value such that the evaluation index value, calculated using a target function selected according to the operation conditions of constraint conditions of whether to prohibit change between start and stop of the equipment 2 and the upper and lower limit values of the operation setting value indicated by the operation conditions, decreases. Depending on a type of the index, the setting value calculating unit 105 may determine the operation setting value such that the evaluation index value increases. In the following description, a case in which the evaluation index value decreases will be described. The target function is a function for calculating the evaluation index value using values acquired by the simple characteristic models. Therefore, the setting value calculating unit 105 reads the model coefficient values corresponding to the value of the change factor variable based on the current operation situation or the operation conditions of the equipment 2 from the model coefficient storage unit 104 and calculates values to be substituted into the target function using the simple characteristic models to which the read model coefficient values are applied. The setting value calculating unit 105 outputs the determined operation setting value to the monitoring and control device 3.

The setting value calculating device 1 is embodied by one or more computer devices. When the setting value calculating device 1 is embodied by a plurality of computer devices, functional units corresponding to the respective computer devices may be arbitrarily determined. One functional unit may be embodied by a plurality of computer devices.

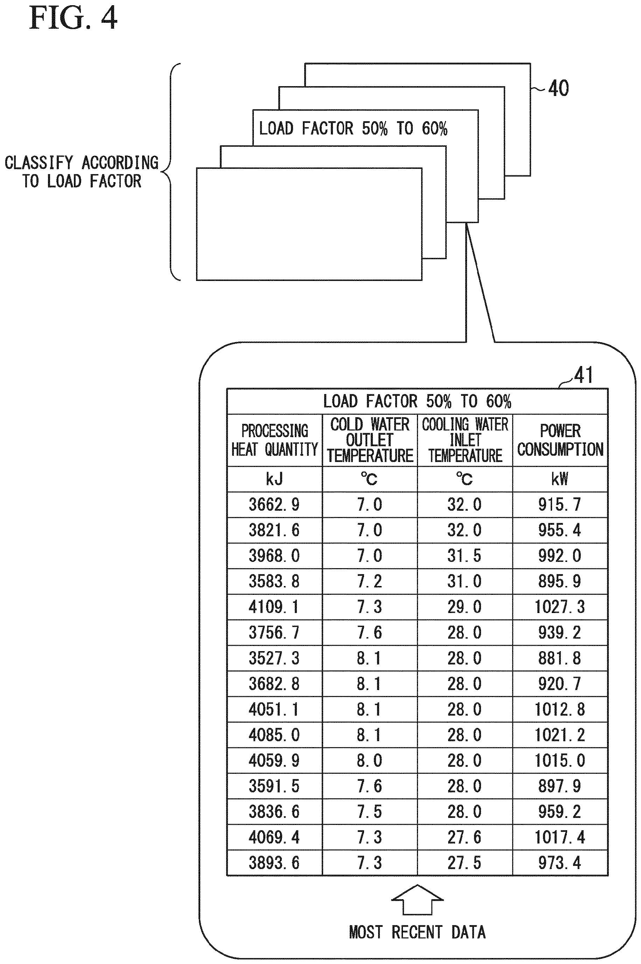

Fig. 4 is a diagram illustrating an example of a data storage format in the data storage unit 102. In the drawing, a storage format of results data associated with the heat source machine 210 is illustrated as an example. The data storage unit 102 includes a data storage area 40 for each item of equipment. The results data is classified and stored according to ranges of the load factor in the data storage area 40. The load factor is an operation ratio with respect to a rated capacity of the equipment 2 and is a ratio of a cooling heat quantity at the time of operation to a rated cooling capacity when the equipment 2 is a heat source machine 210. In this way, the data writing unit 101 distributes and writes the results data to the data storage area 40.

In the drawing, details of a data table 41 which is stored in an area corresponding to a load factor of 50% to 60% in the data storage area 40 are illustrated. Items of results data which are set in the data table 41 include the processing heat quantity, the cold water outlet temperature, the cooling water inlet temperature, and the power consumption which are acquired from the equipment state data. The data format of the data table 41 is the same as in the other ranges of the load factor. For example, the maximum number of rows of the data table 41 corresponding to each range of the load factor is set in advance. When the data writing unit 101 additionally writes the most recent results data during operation of the equipment to the last row of the data table 41, the number of rows of the data table 41 increases. When the number of rows of the data table 41 reaches the preset maximum number of rows, the data writing unit 101 deletes data from the oldest data (the uppermost row of the data table 41 in Fig. 4). Accordingly, the size of the data table 41 does not increase infinitely and it is possible to construct a data table in which the most recent results data is always stored for each range of the load factor.

A characteristics model of the equipment will be described below with reference to characteristics of a heat source machine which is principal equipment of the heat source system.

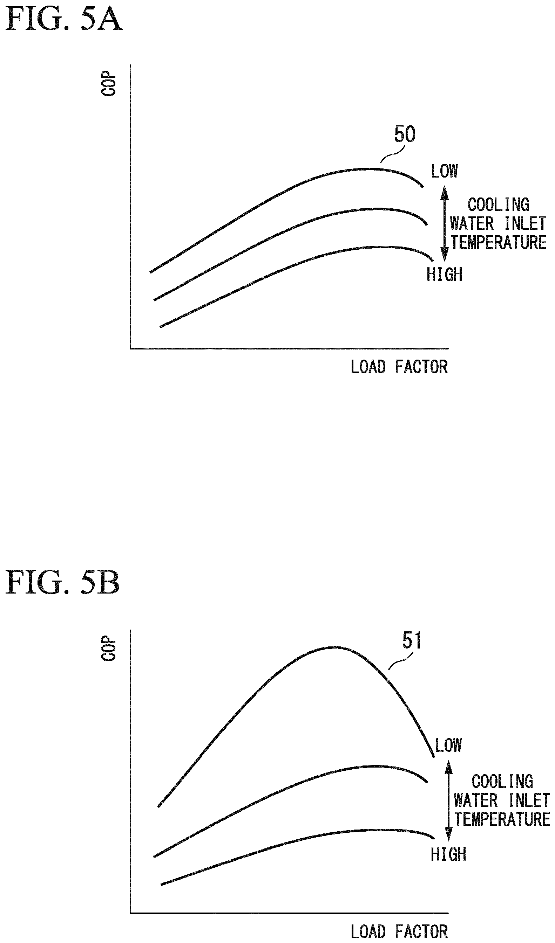

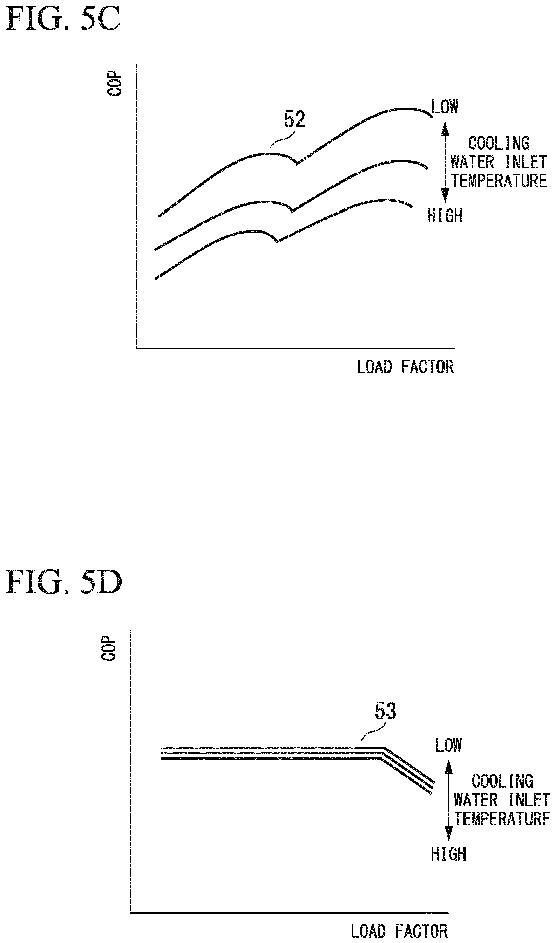

Figs. 5A, 5B, 5C, and 5D are diagrams illustrating a characteristics model of a heat source machine constituting a heat source system which is a monitoring and control target of the monitoring and control system according to this embodiment. Figs. 5A, 5B, 5C, and 5D illustrate four representative types of changes of a coefficient of performance (COP) when a load factor of a heat source machine is represented by a horizontal axis. In general, the COP of a heat source machine is modeled as expressed by Expression (1).
[Math. 1]

$$COP^i = f(L^i 、 T_{WO}{}^i 、 T_{CWI}{}^i) \qquad \cdots (1)$$

$L^i$: load factor, $T_{wo}{}^i$: cold water outlet temperature, $T_{CWI}{}^i$: cooling water inlet temperature or outside air wet-bulb temperature ("i" is a heat source machine number.)

From Expression (1), it can be seen that the COP of the heat source machine changes depending on the load factor, the cold water outlet temperature, and the cooling water inlet temperature. For example, in an air cooling type heat source machine which does not require cooling water, an outside air wet-bulb temperature may be a variable instead of the cooling water inlet temperature.

Figs. 5A, 5B, 5C, and 5D illustrate examples of the change of the COP with respect to the load factor and the cooling water temperature when the cold water outlet temperature is fixed among the above-mentioned variables (the load factor, the cold water outlet temperature, and the cooling water inlet temperature) and illustrate characteristics curves which are frequently described in a catalog issued by a manufacturer.

A characteristics example 50 illustrated in Fig. 5A often appears in general heat source machines and the COP is a maximum at a load factor which is slightly less than a maximum load factor. In the characteristics example 50, since the change of the COP is relatively slow, it can be modeled well using a nonlinear curve of about second order.

In a characteristics example 51 illustrated in Fig. 5B, the COP changes remarkably particularly when the cooling water temperature is low and an approximation error increases in the nonlinear curve of about second order. These characteristics appear in an inverter type heat source machine in which a rotation speed of a compressor is variable.

A characteristics example 52 illustrated in Fig. 5C corresponds to a heat source machine including a plurality of compressors. In the characteristics example 52, since the characteristics changes discontinuously in the vicinity of an intermediate load factor at which the number of compressors operated varies, approximate curves corresponding to the number of compressors are required to model the entire load factor of the characteristics of the heat source machine. When change of the number of compressors operated is determined on the basis of a heating medium state or the like in the heat source machine, the discontinuous points may not be uniquely defined with information which can be acquired by the central monitoring and control device 3.

A characteristics example 53 illustrated in Fig. 5D corresponds to a heat source machine including more compressors with a small capacity and is different from the above-mentioned characteristics.

In this way, the characteristics of the heat source machines are changed in a complicated manner particularly with a change of the load factor depending on the models. In consideration of a characteristics change depending on the cold water outlet temperature, corresponding technical skills are required to model the characteristics of the heat source machines in all the operation areas and thus a user has difficulty in adjustment.

Therefore, the model coefficient deriving unit 103 of the setting value calculating device 1 according to this embodiment learns a characteristics model of equipment using a set of simple characteristics models decreased in the number of dimensions by generating from the characteristics model on the basis of the value of the variable serving as a change factor of the characteristics.

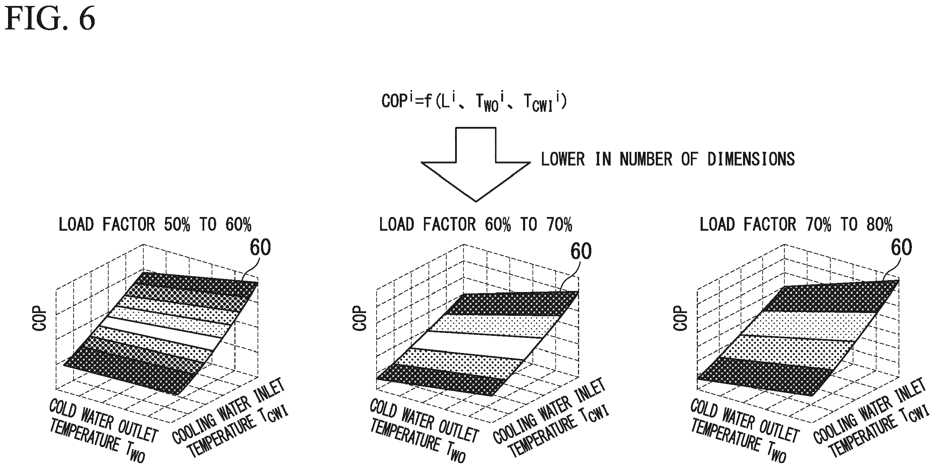

Fig. 6 is a diagram illustrating low-dimension images of the characteristics model. The images illustrated in the drawing are images of simple characteristics models 60 generated form the characteristics model of a heat source machine depending on the load factor which is a variable particularly exhibiting a complicated characteristics change. By performing such a decrease in the number of dimensions, the simple characteristics model for each load factor L constituting the characteristics model of the heat source machine, which is described by Expression (1) can be expressed by an approximate expression $g_L$ expressed by Expression (2).
[Math. 2]

$$COP^i = g_L{}^i(T_{WO}{}^i 、 T_{CWI}{}^i) \qquad \cdots (2)$$

$T_{WO}{}^i$: cold water outlet temperature, $T_{CWI}{}^i$: cooling water inlet temperature or outside air wet-bulb temperature ("i" is a heat source machine number.)

In Expression (2), when the approximate expression $g_L$ at a load factor L is defined as a linear equation, an efficient optimization method such as a linear programming method can be used for optimization which will be described later. For example, when the approximate expression $g_L$ is a linear equation, it is expressed by $COP^i = a \times T_{WO}{}^i + b \times T_{CWI}{}^i + c$ and the model coefficients are a, b, and c. According to Expression (2), complication of modeling which differs depending on the type of the equipment 2 can be avoided and a versatile characteristics expression which can be easily learned from results data which are updated from moment to moment can be provided.

The operation of the setting value calculating device 1 according to this embodiment will be described below. The operation of the setting value calculating device 1 is roughly divided into an operation of learning a model and an operation of calculating a setting value. The setting value calculating device 1 updates the characteristics model of the equipment 2 on the basis of the results data stored in the data storage unit 102 at the time of learning a model. The setting value calculating device 1 calculates a setting value suitable for decreasing a desired evaluation index value on the basis of moment to moment situations using the learned characteristics model at the time of calculating the setting value.

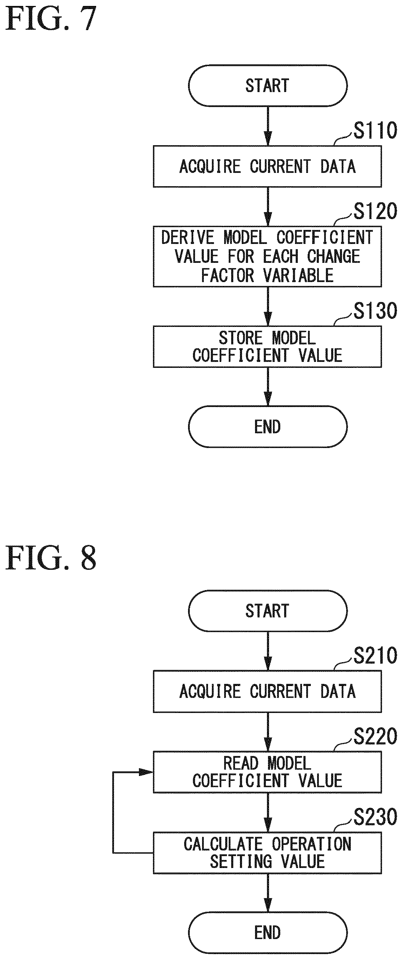

Fig. 7 is a flowchart illustrating an operation flow of learning a model in the setting value calculating device 1.

First, the data writing unit 101 of the setting value calculating device 1 writes current equipment state data, current heating medium state data, and current outside air state data input to the setting value calculating device 1 to the data storage unit 102 (Step S110). At this time, the data writing unit 101 additionally registers results data acquired from the input data in the data table 41 in the area of the data storage area 40 corresponding to a value of the change factor variable (for example, the load factor) which is set in the results data for each item of equipment 2. When the number of rows of the data table 41 reaches the maximum number of rows, the data writing unit 101 deletes the row of the oldest results data. The setting value calculating device 1 may collect the current data (the equipment state data, the heating medium state data, and the outside air state data) by acquiring the current data including the past data at the time of learning a model or may periodically collect the most recent data asynchronously with the learning of a model.

Then, the model coefficient deriving unit 103 derives model coefficient values of the simple characteristics models using the results data read from the data storage unit 102 for each value range of the change factor variable for each item of equipment 2. For example, in the heat source machine 210, the model coefficient deriving unit 103 reads the results data on the heat source machine 210 from the data storage unit 102 for each range of the load factor. The model coefficient deriving unit 103 derives the model coefficient values of the approximate expression $g_L$ expressed by Expression (2) using the actual value of the cold water outlet temperature and the cooling water inlet temperature of the heat source machine 210 and the COP which are acquired from the read results data (Step S120). The COP is calculated by dividing the processing heat quantity by the power consumption. The model coefficient deriving unit 103 can derive the model coefficient values of the approximate expression $g_L$ for the results data using a generally known method such as a least square method.

Finally, the model coefficient deriving unit 103 stores the model coefficient values derived for each value range of the change factor variable for each item of equipment 2 in the model coefficient storage unit 104 (Step S130). For example, the model coefficient deriving unit 103 stores the model coefficient values of the approximate expression $g_L$ for each range of the load factor derived for each heat source machine 210 in the model coefficient storage unit 104.

The operation flow of the setting value calculating device 1 of the heat source system at the time of learning a model according to this embodiment has been described. The above-mentioned operations may be periodically performed at predetermined intervals or may be non-periodically performed when an execution command from the outside is input by a user's operation or the like.

Fig. 8 is a flowchart illustrating an operation flow of calculating a setting value in the setting value calculating device 1.

First, the setting value calculating unit 105 acquires the most recent results data of each item of equipment 2 at the time of calculating the operation setting value from the data storage unit 102 (Step S210). Then, the setting value calculating unit 105 reads the model coefficient values corresponding to the calculation conditions from the model coefficient storage unit 104 (Step S220). The setting value calculating unit 105 calculates the optimal operation setting value in the operation conditions read from the data storage unit 102 on the basis of values acquired using the simple characteristics models to which the read model coefficient values are applied (Step S230).

For example, it is assumed that an target function for optimizing the operation setting value depending on the operation conditions is a function of calculating power consumption using the simple characteristics models. The power consumption $E_{HS}{}^i$ of the heat source machine i at a predetermined cold water outlet temperature $T_{WO}{}^i$ and a predetermined cooling water inlet temperature $T_{CWT}{}^i$ can be expressed by an target function expressed by Expression (3). The heat source machine i is an i-th heat source machine 210.

[Math. 3]

$$E_{HS}{}^i = \frac{H^{i\prime}}{g_L{}^i (T_{WO}{}^i,\ T_{CWI}{}^i)} \qquad \cdots (3)$$

$E_{HS}{}^i$: power consumption of a heat source machine, $H^i$: processing heat quantity of a heat source machine ("i" is a heat source machine number.)

Here, $H^{i,}$ denotes a current value of the processing heat quantity of the heat source machine i indicated by the results data acquired from the data storage unit 102. $g_L{}^i$ denotes an approximate expression of the simple characteristics models using the model coefficient values read from the model coefficient storage unit 104 to correspond to the current load factor L (the calculation condition) of the heat source machine i which is indicated by the results data.

This calculate may be performed using Expression (4) on the basis of the current power consumption $E_{HS}{}^{i,}$ of the heat source machine i indicated by the results data acquired from the data storage unit 102.

[Math. 4]

$$E_{HS}{}^i = E_{HS}{}^{i\prime} \cdot \frac{H^{i\prime}}{g_L{}^i (T_{WO}{}^i,\ T_{CWI}{}^i)} \bigg/ \frac{H^{i\prime}}{g_L{}^i (T_{WO}{}^{i\prime},\ T_{CWI}{}^{i\prime})}$$

$$\cdots (4)$$

*$T_{WO}{}^{i\prime}$ : current cold water outlet temperature setting, $T_{CWI}{}^{i\prime}$ : current cooling water inlet temperature setting ("i" is a heat source machine number.)*

According to Expression (4), only a change rate of the current power consumption of the heat source machine 210 when the cold water outlet temperature or the cooling water inlet temperature is changed is calculated using the simple characteristics models. Accordingly, when the total power consumption of the heat source system including a plurality of equipment 2 is calculated, it is possible to decrease a calculation error due to integration of model errors of each item of equipment 2.

The setting value calculating unit 105 selects the cold water outlet temperature and the cooling water inlet temperature of each heat source machine 210 when the total power consumption of the heat source system is the smallest, and outputs the operation setting value for controlling the heat source machines 210 such that the selected cold water outlet temperature and the selected cooling water inlet temperature are achieved to the monitoring and control device 3. Here, the cold water outlet temperature and the cooling water inlet temperature selected for each heat source machine 210 are set as the operation setting values.

When the number of heat source machines 210 operates is changed, the setting value calculating unit 105 repeatedly performs the processes of Steps S220 and S230. That is, the setting value calculating unit 105 can read the model coefficient values corresponding to a predetermined load factor from the model coefficient storage unit 104 again and can calculate the power consumption of the heat source machine 210 by substituting a predetermined processing heat quantity $H^{i,}$ for Equations (3) or (4). For example, when one heat source machine 210 is operating at a load factor of 80% and one heat source machine 210 with the same capacity operates additionally, the model coefficient values corresponding to the load factor of 40% can be extracted and the processing heat quantity $H^{i,}/2$ can be substituted for Expression (3) or (4) instead of the processing heat quantity $H^{i,}$. Since the model coefficient values of the simple characteristics models for each item of equipment 2 are stored in advance in the model coefficient storage unit 104 for each range of the load factor, the setting value calculating unit 105 can efficiently perform calculation without referring to large-capacity data stored in the data storage unit 102 every time. Therefor the setting values of the whole heat source system can be derived in a practical time.

Specifically, for example, in case of complete search, the setting value calculating unit 105 calculates the total power consumption of the heat source machine for each condition while changing the heat source machine 210 to be operated and the conditions of the cold water outlet temperature and the cooling water inlet temperature of each heat source machine 210 to be operated depending on the operation conditions. The setting value calculating unit 105 selects conditions which are used when the calculated total power consumption of the heat source machines is the smallest. The setting value calculating unit 105 determines the selected conditions, that is, the heat source machine 210 to be operated and the cold water outlet temperature and the cooling water inlet temperature of the heat source machine 210 to be operated, as the operation setting values and outputs the determined conditions to the monitoring and control device 3.

Although an example in which target equipment 2 for which the model coefficient values of the simple characteristics models is the heat source machine 210 has been described above, characteristics of energy consumption of the equipment 2 constituting the heat source system may be modeled using the above-mentioned methods and the evaluation index value of the whole heat source system may be formulated. Accordingly, by applying a mathematical optimization technique such as complete search by simulation or a generally known linear programming method, the operation setting values including one or more of the cold water outlet temperature, the cooling water inlet temperature, the number of equipment operated for minimizing the desired evaluation index are derived. Although an example in which the evaluation index value is energy consumption has been described above, another evaluation index value such as emission of carbon dioxide or energy efficiency may be used. The setting value calculating unit 105 selects the operation setting values to decrease the evaluation index value when the evaluation index value is the emission of carbon dioxide and to increase the evaluation index value when the evaluation index value is the energy efficiency.

Although an example in which the change factor variable used to prepare the simple characteristics models is set to the load factor which is not used as the operation setting value among the load factor, the cold water outlet temperature, and the cooling water inlet temperature (or the outside air wet-bulb temperature) which are used for the characteristics model of the heat source machine 210 has been described above, the change factor variable may be set to one or more of the load factor, the cold water temperature, and the cooling water temperature (or the outside air wet-bulb temperature).

Variables used for the characteristics model expressing the characteristics of the equipment 2 using an expression differ depending on the type of the equipment 2. Depending on the type of the equipment 2, the change factor variable for preparing the simple characteristics models may be arbitrarily selected among the variables used for the characteristics model. It is assumed that the actual values of the variables used for the simple characteristics models are acquired from one or more of the equipment state data, the heating medium state data and the outside air state data.

In the setting value calculating device 1 according to this embodiment, by using the simple characteristics models decreased in the number of dimensions by generating from the characteristics model depending on the load factor or the like, it is possible to avoid complication of modeling which varies depending on the type of the equipment 2 and to easily automatically learn and store the most recent model coefficient values from the results data. By causing the setting value calculating device 1 to efficiently derive the operation setting values of the heat source system with reference to the model coefficient values in a practical time, it is possible to continuously decrease the desired evaluation index such as energy consumption for the whole heat source system.

(Second embodiment)

In this embodiment, when there is a likelihood that accuracy of the model coefficient values acquired by learning will be low, the model coefficient values are corrected. Hereinafter, differences from the first embodiment will be mainly described.

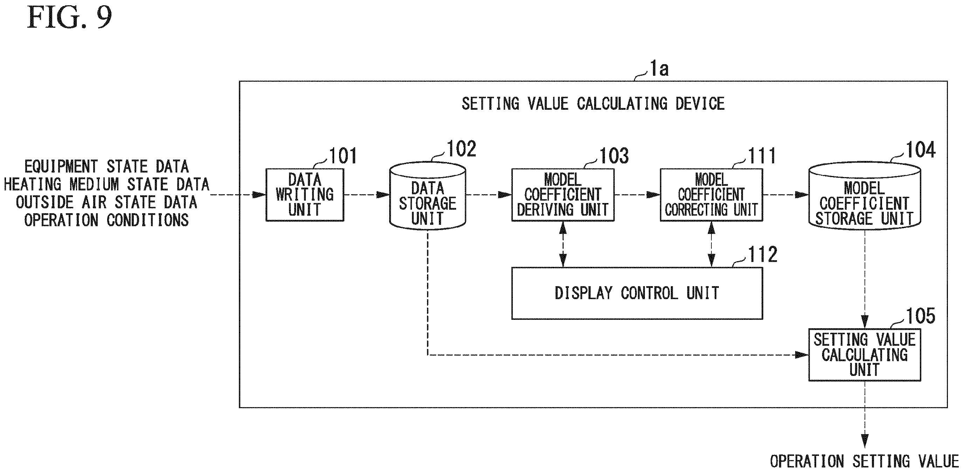

A monitoring and control system according to this embodiment has a configuration in which the setting value calculating device 1 in the monitoring and control system according to the first embodiment illustrated in Fig. 1 is replaced with a setting value calculating device 1a illustrated in Fig. 9.

Fig. 9 is a functional block diagram illustrating a configuration of the setting value calculating device 1a according to this embodiment and illustrates only the functional blocks associated with this embodiment. The setting value calculating device 1a illustrated in the drawing is different from the setting value calculating device 1 according to the first embodiment illustrated in Fig. 3 in that a model coefficient correcting unit 111 and a display control unit 112 are additionally provided. The model coefficient correcting unit 111 corrects the model coefficient values when the model coefficient values derived by the model coefficient deriving unit 103 match a correction condition which is a predetermined condition for determining that the calculation accuracy is low. The correction condition is that a sign (a positive value or a negative value) of a model coefficient value does not match a sign preset by a user or a sign of a model coefficient value derived for the change factor variable in a different value range of the same equipment. Alternatively, the correction condition may be that the sign of the model coefficient value does not match a sign of a model coefficient value derived in the past for the value range of the same change factor variable of the same equipment 2 or a sign of a model coefficient value derived for the value range of the same change factor variable of another equipment 2 of the same type (model). The display control unit 112 causes the monitoring and control device 3, the monitoring device 4, or the setting value calculating device 1a to display information indicating the model coefficient value derived by the model coefficient deriving unit 103 or information indicating that the model coefficient value matches the correction condition.

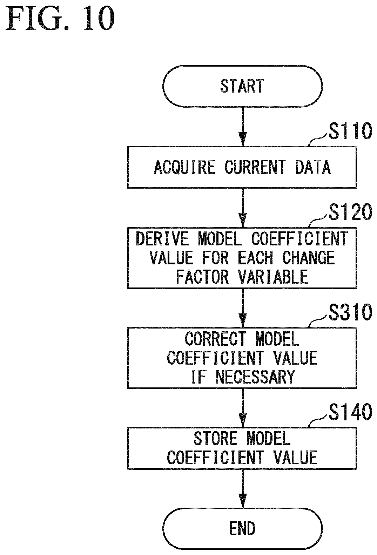

Fig. 10 is a flowchart illustrating an operation flow of learning a model in the setting value calculating device 1a. In the drawing, the same processes as in the operation flow of learning a model in the setting value calculating device 1 illustrated in Fig. 7 will be referenced by the same step numbers. Here, it is assumed that the correction condition is that the sign of the model coefficient value does not match the sign of the preset model coefficient value.

The data writing unit 101 of the setting value calculating device 1a writes the current equipment state data, the current heating medium state data, and the current outside state data input to the setting value calculating device 1 to the data storage unit 102 (Step S110). The model coefficient deriving unit 103 derives model coefficient values of the simple characteristics models using the results data read from the data storage unit 102 for each value range of the change factor variable for each item of equipment 2 (Step S120).

The model coefficient correcting unit 111 determines whether the sign of the model coefficient of the simple characteristics model corresponding to each value range of the change factor variable of the same equipment matches a preset sign. In general, for example, a refrigerator is improved in the COP by decreasing a cooling water temperature and is deteriorated in the COP by decreasing a cold water temperature. Therefore, the minus or plus of this correlation or the sign of the model coefficient acquired from the minus or plus of the correlation is input as the correction condition in advance. The model coefficient correcting unit 111 determines whether a model is suitable by comparing the sign of the derived model coefficient value of the simple characteristics model with the sign of the model coefficient indicated by the correction condition. When the signs match each other, the model coefficient correcting unit 111 writes the model coefficient value of the simple characteristics model derived by the model coefficient deriving unit 103 to the model coefficient storage unit 104 (Step S140). On the other hand, as for the simple characteristics model of which the sign does not match, the model coefficient correcting unit 111 corrects the model coefficient value of the simple characteristics model derived by the model coefficient deriving unit 103 (Step S310) and writes the corrected model coefficient value to the model coefficient storage unit 104 (Step S140).

When the model coefficient value is corrected in Step S310, the model coefficient correcting unit 111 acquires the corrected model coefficient value, for example, using following some correction methods.

A first correction method is a method of using a past model coefficient value, for example, a previous model coefficient value, stored in the model coefficient storage unit 104 instead of updating the model coefficient value to the model coefficient value derived by current learning.

A second correction method is a method of using a model coefficient value of a simple characteristics model derived for another range of the load factor. The model coefficient deriving unit 103 derives the model coefficient value of the simple characteristics model for each range of the load factor for the same equipment in Step S120. Therefore, the model coefficient value derived for the simple characteristics model selected by the user among a plurality of simple characteristics models acquired for the ranges of the load factor for the same equipment is used.

A third correction method is a method of re-calculating the model coefficient value using changed learning data. That is, the model coefficient value is re-calculated using results data which is different from that when the model coefficient to be corrected is derived in at least a part. For example, the model coefficient correcting unit 111 instructs the model coefficient deriving unit 103 to derive the model coefficient value using results data designated by the user among the results data stored in the data storage unit 102 or using results data other than the results data designated by the user. The model coefficient deriving unit 103 outputs the re-calculated model coefficient value to the model coefficient correcting unit 111 in response to an instruction from the model coefficient correcting unit 111.

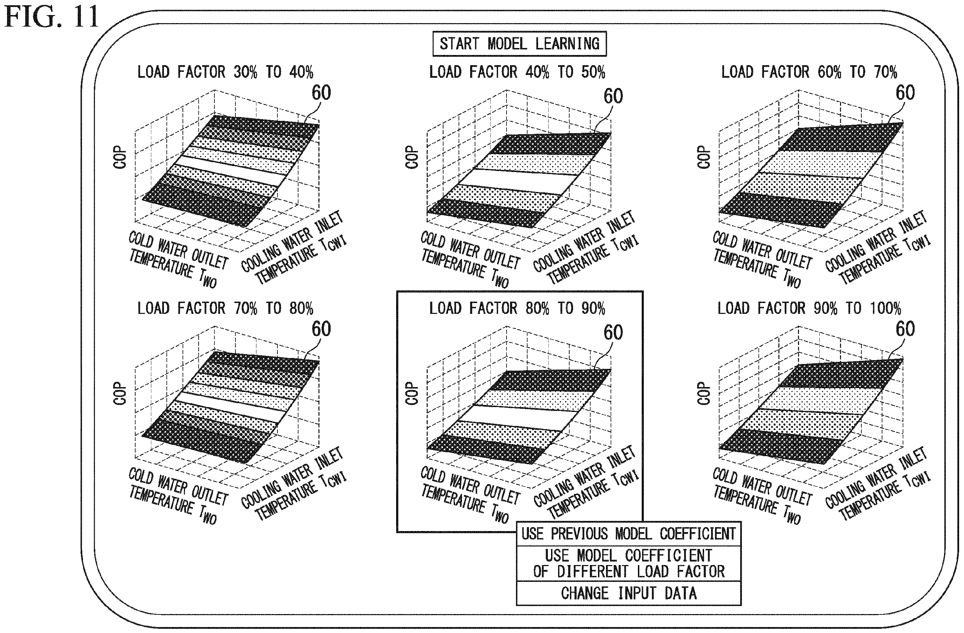

Fig. 11 illustrates an example of a display screen of model coefficient value derivation results. In the drawing, a display screen of the model coefficient value derivation result for a certain heat source machine 210 is illustrated. By allowing a user to push a model learning start button using a mouse which is an input device, the model coefficient deriving unit 103 learns the model coefficient value by performing the process of Step S120. As shown in the drawing, the display control unit 112 graphically displays the simple characteristics models to which the model coefficient value derived by the model coefficient deriving unit 103 for each range of the load factor is applied. The display control unit 112 displays the simple characteristics models using the model coefficient value which has been determined to require correction by the model coefficient correcting unit 111 to satisfy the correction condition with the simple characteristics model surrounded with a solid line. When a user selects a corresponding position using a mouse which is an input device, the display control unit 112 displays a list of correction methods. There are three correction methods as follows. The first correction method is a method of using a previous model coefficient value instead of updating the model coefficient value based on the current learning. The second correction method is a method of using a model coefficient value in a different range of the load factor for the same equipment. The third correction method is a method of changing results data (input data) which is used for re-learning the model coefficient value. When the user selects one correction method to be employed among the plurality of correction methods, the model coefficient correcting unit 111 performs the process of Step S310 illustrated in Fig. 10 using the selected correction method and corrects the corresponding model coefficient value.

The operation flow of calculating a setting value in the setting value calculating device 1a is the same as in the first embodiment illustrated in Fig. 8.

In the setting value calculating device according to this embodiment, when the derived model coefficient value of the simple characteristics model satisfies a predetermined condition for determining that calculation accuracy is low, it is possible to correct the model coefficient value of the simple characteristics model using the method selected by a user. Accordingly, when an abnormal value is mixed into the results data or when learning cannot be normally performed, it is possible to continuously obtain the operation setting value for equipment control which is suitable for decreasing the desired evaluation index value for the whole heat source system.

(Third embodiment)

In this embodiment, an operation setting value associated with start and stop of equipment is determined in consideration of a minimum operation time and a minimum stop time of the equipment. In the following description, differences from the first embodiment will be mainly described, but differences between this embodiment and the first embodiment may be applied to the second embodiment.

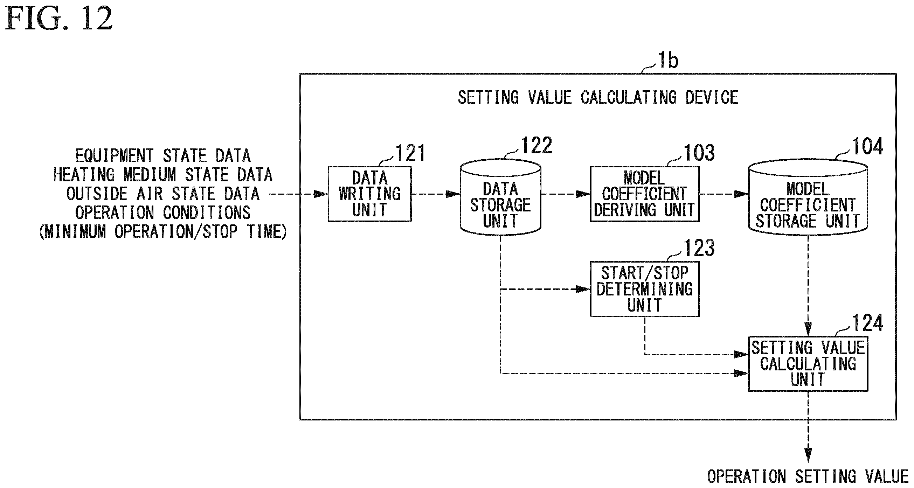

A monitoring and control system according to this embodiment has a configuration in which the setting value calculating device 1 of the monitoring and control system according to the first embodiment illustrated in Fig. 1 is replaced with a setting value calculating device 1b illustrated in Fig. 12.

Fig. 12 is a functional block diagram illustrating a configuration of the setting value calculating device 1b according to this embodiment and illustrates only functional blocks associated with this embodiment. The setting value calculating device 1b illustrated in the drawing is different from the setting value calculating device 1 according to the first embodiment illustrated in Fig. 3, in that a data writing unit 121, a data storage unit 122, and a setting value calculating unit 124 are provided instead of the data writing unit 101, the data storage unit 102, and the setting value calculating unit 105 and a start/stop determining unit 123 is additionally provided. The equipment state data, the heating medium state data, and the outside air state data input to the setting value calculating device 1b include information of measurement date and time, and the operation conditions further include a minimum operation time and a minimum stop time.

The data writing unit 121 writes results data and operation conditions to the data storage unit 122 similarly to the first embodiment. In addition, the data writing unit 121 writes the information of measurement date and time of the results data to the data storage unit 122. The data storage unit 122 stores the results data, the information of measurement date and time, and the operation conditions.

The start/stop determining unit 123 calculates an elapsed time after the equipment 2 is stopped or an elapsed time after the equipment 2 starts operation on the basis of the information of measurement date and time stored in the data storage unit 122. The start/stop determining unit 123 determines that the equipment 2 of which the elapsed time after being stopped is less than the minimum stop time is excluded from an operation target. The start/stop determining unit 123 determines that the equipment 2 of which the elapsed time after operation is started is less than the minimum operation time is excluded from a stopping target. The start/stop determining unit 123 notifies the setting value calculating unit 124 of start/stop conditions indicating the equipment 2 to be excluded from the operation target and the equipment 2 to be excluded from the stopping target.

The setting value calculating unit 124 calculates an operation setting value suitable for controlling the equipment 2 of the heat source system under the operation conditions read from the data storage unit 122 similarly to the first embodiment. The setting value calculating unit 124 defines a condition that the start/stop conditions notified from the start/stop determining unit 123 is further satisfied in addition to the operation conditions as the constraint conditions for the equipment 2 to be operated.

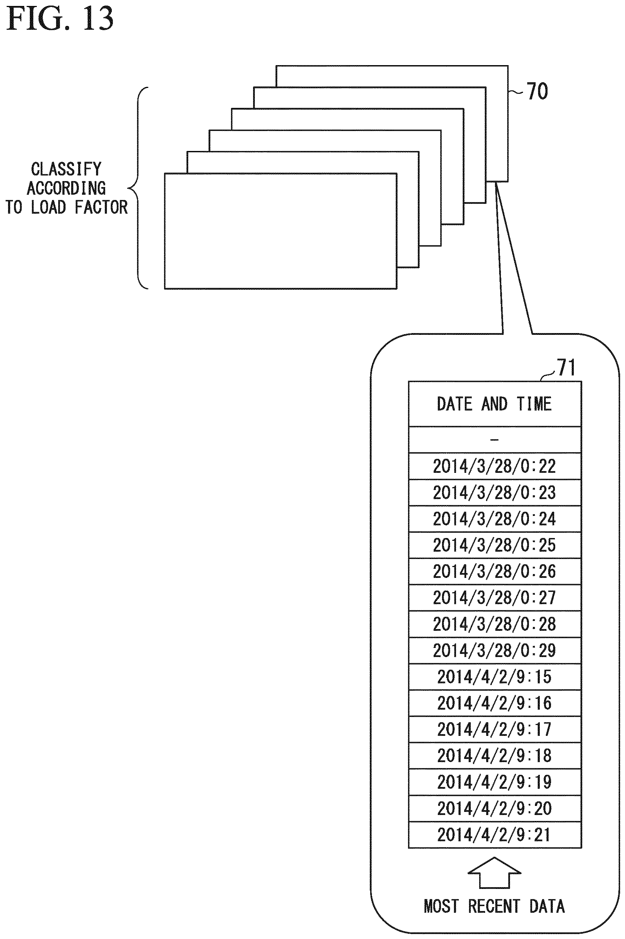

Fig. 13 is a diagram illustrating an example of a data storage format in the data storage unit 122. In the drawing, a storage format of the results data and the measurement date and time for the heat source machine 210 is exemplified. The data storage unit 122 includes a data storage area 70 for each item of equipment. In the data storage area 70, results data is stored in areas into which the data storage area is classified according to the range of the load factor similarly to the first embodiment illustrated in Fig. 4 and a data table 71 in which the measurement date and time of the results data is stored is stored. That is, a difference from the first embodiment is that the data storage area 70 is extended to include results data for each load factor and a data table 71 in which date and time at which the results data is measured is recorded. Information of the most recent date and time is added to the last row of the data table 71.

Operations of the setting value calculating device 1b according to this embodiment will be described below.

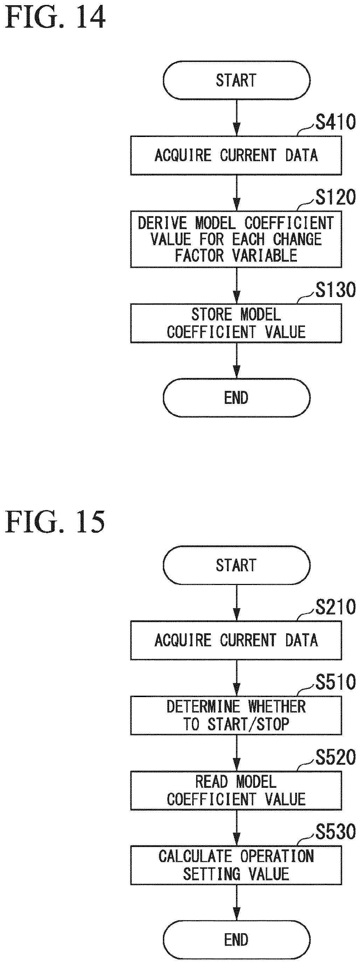

Fig. 14 is a flowchart illustrating an operation flow of learning a model in the setting value calculating device 1b. In the drawing, the same processes as in the operation flow of learning a model in the setting value calculating device 1 illustrated in Fig. 7 will be referenced by the same step numbers.

The data writing unit 121 of the setting value calculating device 1b writes current state data, current heating medium state data, and current outside air state data which are input as results data in real time to the setting value calculating device 1b and measurement date and time of the results data to the data storage unit 122 (Step S410). The model coefficient deriving unit 103 derives a model coefficient value of a simple characteristics model using the results data read from the data storage unit 122 for each value range of the change factor variable for the equipment 2 (Step S120). The model coefficient deriving unit 103 stores the model coefficient value derived for each value range of the change factor variable for the equipment 2 in the model coefficient storage unit 104 (step S130).

Fig. 15 is a flowchart illustrating an operation flow of calculating a setting value in the setting value calculating device 1b. In the drawing, the same processes as in the operation flow of calculating a setting value in the setting value calculating device 1 illustrated in Fig. 8 will be referenced by the same step numbers.

First, the setting value calculating unit 124 acquires the most recent results data of the equipment 2 at the time point at which the operation setting value is calculated from the data storage unit 122 (Step S210).

The start/stop determining unit 123 determines whether to prohibit change of start/stop state of the equipment 2 constituting the heat source system (Step S510). As described above, information of the most recent measurement date and time is added to the last row of the data table 71. Therefore, the start/stop determining unit 123 determines whether to prohibit start/stop using the following method by comparing the measurement date and time set in the lowest row of the data table 71 with the current date and time.

First, the start/stop determining unit 123 acquires the measurement date and time set in the lowest row of the data table 71 for the equipment 2 as latest measurement date and time. The latest measurement date and time is a date and time at which the equipment 2 is latest operated.

The start/stop determining unit 123 determines that the equipment 2 is currently in a stopping state when the latest measurement date and time acquired for the equipment 2 is different from a current date and time (or when a difference between the latest measurement date and time and the current date and time is greater than a measurement interval of results data). The start/stop determining unit 123 calculates a period after operation of the equipment 2 is stopped on the basis of the difference between the latest measurement date and time and the current date and time. The start/stop determining unit 123 determines that start/stop of the equipment 2 can be changed (the equipment can be set as an operation target) when the calculated period is longer than the minimum stop time, and determines that start/stop of the equipment 2 cannot be changed (the equipment cannot be set as an operation target) when the calculated period is shorter than the minimum stop time.

On the other hand, the start/stop determining unit 123 determines that the equipment 2 is currently in an operating state when the latest measurement date and time acquired for the equipment 2 is equal to the current date and time (or when the difference between the latest measurement date and time and the current date and time is equal to or less than the measurement interval of results data). The start/stop determining unit 123 searches the data table 71 upward from the lowest row and retrieves a measurement date and time which is not continuous from a previous measurement date and time (which is separated by the measurement interval or more). The measurement date and time specified by this search is a date and time at which operation of the equipment 2 is started. The start/stop determining unit 123 calculates a period after operation of the equipment 2 is started on the basis of the difference between the measurement date and time specified by the search and the current date and time. The start/stop determining unit 123 determines that start/stop of the equipment 2 can be changed (the equipment can be set as a stop target) when the calculated period is longer than the minimum operation time, and determines that start/stop of the equipment 2 cannot be changed (the equipment cannot be set as a stop target) when the calculated period is shorter than the minimum stop time.

By using the above-mentioned method, the start/stop determining unit 123 determines whether to prohibit start/stop of the equipment 2 and notifies the setting value calculating unit 124 of the determination result as a start/stop state changing condition. The setting value calculating unit 124 reads the model coefficient value corresponding to the calculation condition from the model coefficient storage unit 104 (Step S520). For example, when the current start/stop state of the heat source machine 210 cannot be changed, the start/stop determining unit 123 reads the model coefficient value corresponding to a current load factor of the heat source machine 210. When the current start/stop state of the heat source machine 210 can be changed, the start/stop determining unit 123 reads the model coefficient value corresponding to a predicted load factor acquired depending on the number and the load factor of heat source machines 210 which is currently operated and the number of heat source machines 210 which are operated after being changed. The setting value calculating unit 124 calculates an operation setting value suitable for decreasing the evaluation index value in the operation conditions and the start/stop state changing condition on the basis of a value obtained using the simple characteristics model to which the read model coefficient value is applied (Step S530).

For example, in case of complete search, the setting value calculating unit 124 calculates the total heat source machine power consumption for each condition while changing the heat source machines 210 which are operated and the conditions of the cold water outlet temperature and the cooling water inlet temperature of the heat source machines 210 which are operated depending on the operation conditions similarly to the first embodiment. At this time, the setting value calculating unit 124 selects and uses only the conditions matching the start/stop state changing condition among the conditions of the heat source machines 210 which are operated under the operation conditions. The setting value calculating unit 124 selects the conditions when the calculated total heat source machine power consumption is the smallest and determines the selected conditions, that is, the cold water outlet temperature and the cooling water inlet temperature of the heat source machines 210 which are an operation target as the operation setting values. The setting value calculating unit 124 outputs the determined operation setting values to the monitoring and control device 3.

In the setting value calculating device 1b of the heat source system according to this embodiment, the start/stop state of the equipment 2 which is derived by the setting value calculating device 1b is not changed within a time shorter than the minimum operation time or the minimum stop time which is set in advance by a user. Accordingly, it is possible to stably operate the whole heat source system and to obtain the operation setting values for minimizing the desired evaluation index such as energy consumption.

According to at least one of the above-mentioned embodiments, since the model coefficient driving unit is provided, it is possible to derive values of coefficients of simple characteristics models, which are lowered in the number of dimensions from a characteristics model which is an expression indicating characteristics of equipment, using actual values of variables. A simple characteristics model is an expression which corresponds to a value range of a change factor variable which is a variable serving as a change factor of equipment characteristics among the variables used for the characteristics model and which is lowered in the number of dimensions using the variables other than the change factor variable among the variables used for the characteristics model. Accordingly, it is possible to simply and accurately acquire a model indicating equipment characteristics.

According to at least one of the above-mentioned embodiments, since the model coefficient correcting unit is provided, a coefficient value can be corrected in a case in which the coefficient value of a simple characteristics model derived by learning may not be a correct value.

According to at least one of the above-mentioned embodiments, since the setting value calculating unit is provided, it is possible to calculate operation setting values which are sued to control operation of a control target system such as a heat source system on the basis of the evaluation index value which is calculated using the simple characteristics model to which the coefficient value derived by learning is applied. Accordingly, it is possible to calculate an operation setting value for decreasing an evaluation index such as energy consumption or emission of carbon dioxide or for increasing an evaluation index such as an operation efficiency and to achieve energy saving by operating the control target system on the basis of the calculated setting value.

The functions of the setting value calculating devices 1, 1a, and 1b in the above-mentioned embodiments may be embodied by a computer. In this case, the functions may be embodied by recording a program for realizing the functions on a computer-readable recording medium and causing a computer system to read and execute the program recorded on the recording medium. The "computer system" which is mentioned herein includes an operating system (OS) or hardware such as peripherals. Examples of the "computer-readable recording medium" include a portable medium such as a flexible disk, a magneto-optical disk, a ROM, or a CD-ROM and a storage device such as a hard disk built in a computer system. The "computer-readable recording medium" may include a medium that dynamically holds a program for a short time like a communication line when a program is transmitted via a network such as the Internet or a communication line such as a telephone circuit and a medium that holds a program for a predetermined time like a volatile memory in a computer system serving as a server or a client in that case. The program may serve to realize a part of the above-mentioned functions, or may serve to realize the above-mentioned functions in combination with another program stored in advance in the computer system.

While some embodiments of the present invention have been described above, these embodiments are presented as examples and are not intended to limit the scope of the invention. These embodiments can be embodied in various forms and can be subjected to various omissions, substitutions, and modifications without departing from the gist of the invention. The embodiments or modifications thereof are included in the scope or gist of the invention and are also included in the scope of the invention described in the appended claims and equivalence thereto.

**Claims**

1. An equipment characteristics model learning device comprising:

    an acquisition unit configured to acquire actual values of variables which are used to express characteristics of equipment in a characteristics model indicating the characteristics; and
    a model coefficient deriving unit configured to derive a value of a coefficient of a simple characteristic model using the acquired actual values, wherein the simple characteristic model corresponds to a value range of a change factor variable which is a variable serving as a change factor for the characteristics among the variables of the characteristic model and indicates the characteristics using variables obtained by lowering the number of dimensions of the characteristic model.

2. The equipment characteristics model learning device according to claim 1, further comprising a model coefficient correcting unit configured to correct the value of the coefficient when the value of the coefficient derived by the model coefficient deriving unit satisfies a predetermined condition.

**3.** The equipment characteristics model learning device according to claim 2, wherein the predetermined condition is a condition that a sign of the value of the coefficient derived by the model coefficient deriving unit does not match a preset sign or does not match a sign of the value of the coefficient derived from another simple characteristics model corresponding to a value for the change factor variable different from that of the simple characteristics model from which the value of the coefficient has been derived.

**4.** The equipment characteristics model learning device according to claim 2 or 3, wherein the model coefficient correcting unit corrects the value of the coefficient using a value of the coefficient which was derived in the past.

**5.** The equipment characteristics model learning device according to claim 2 or 3, wherein the model coefficient correcting unit corrects the value of the coefficient using a value of a coefficient of the simple characteristics model which is derived for the change factor variable of a different value.

**6.** The equipment characteristics model learning device according to claim 2 or 3, wherein the model coefficient correcting unit corrects the value of the coefficient using the value of the coefficient which is derived by the model coefficient deriving unit using the actual values of which at least a portion are different from those when the value of the coefficient was derived.

**7.** The equipment characteristics model learning device according to claim 1, further comprising a setting value calculating unit configured to calculate an operation setting value which is used to control operation of a control target system including the equipment on the basis of an evaluation index value which is calculated using the simple characteristics model to which the value of the coefficient derived by the model coefficient deriving unit is applied.

**8.** The equipment characteristics model learning device according to claim 7, wherein the evaluation index value is a value of energy consumption of the equipment, and
the setting value calculating unit is configured to determine the values of the variables in the simple characteristics models such that a value of total energy consumption of the equipment which is operated in the control target system decreases and to acquire the operation setting value on the basis of the determined values of the variables.

**9.** The equipment characteristics model learning device according to claim 7, wherein the setting value calculating unit is configured to acquire a period elapsing after the equipment starts or stops operating on the basis of a date and time at which the actual values of the variables associated with the equipment are acquired and to determine whether to prohibit start or stop of the equipment on the basis of the acquired period.

**10.** The equipment characteristics model learning device according to claim 1, wherein the equipment is equipment constituting a heat source system, and
the change factor variable is one or more of a load factor of the equipment, a cold water temperature in the equipment, and a cooling water temperature in the equipment.

**11.** An equipment characteristics model learning method which is performed by an equipment characteristics model learning device, the equipment characteristics model learning method comprising:

acquiring actual values of variables which are used to express characteristics of equipment in a characteristics model indicating the characteristics; and
deriving a value of a coefficient of a simple characteristic model using the acquired actual values, wherein the simple characteristic model corresponds to a value range of a change factor variable which is a variable serving as a change factor for the characteristics among the variables of the characteristic model and indicates the characteristics using variables obtained by lowering the number of dimensions of the characteristic model.

**12.** A storage medium storing a program for causing a computer to perform:

an acquisition step of acquiring actual values of variables which are used to express characteristics of equipment in a characteristics model indicating the characteristics; and
a model coefficient deriving step of deriving a value of a coefficient of a simple characteristic model using the acquired actual values, wherein the simple characteristic model corresponds to a value range of a change factor variable which is a variable serving as a change factor for the characteristics among the variables of the characteristic model and indicates the characteristics using variables obtained by lowering the number of dimensions of the characteristic model.

FIG. 1

DATA CENTER

SETTING VALUE
CALCULATING
DEVICE
1

MONITORING AND
CONTROL DEVICE
3

EQUIPMENT
2

BUILDING A

MONITORING AND
CONTROL DEVICE
3

EQUIPMENT
2

BUILDING B

......

......

MONITORING
DEVICE
4

BUILDING C

# FIG. 2

# FIG. 3

## FIG. 4

CLASSIFY ACCORDING TO LOAD FACTOR

LOAD FACTOR 50% TO 60%

~40

~41

| LOAD FACTOR 50% TO 60% | | | |
|---|---|---|---|
| PROCESSING HEAT QUANTITY | COLD WATER OUTLET TEMPERATURE | COOLING WATER INLET TEMPERATURE | POWER CONSUMPTION |
| kJ | °C | °C | kW |
| 3662.9 | 7.0 | 32.0 | 915.7 |
| 3821.6 | 7.0 | 32.0 | 955.4 |
| 3968.0 | 7.0 | 31.5 | 992.0 |
| 3583.8 | 7.2 | 31.0 | 895.9 |
| 4109.1 | 7.3 | 29.0 | 1027.3 |
| 3756.7 | 7.6 | 28.0 | 939.2 |
| 3527.3 | 8.1 | 28.0 | 881.8 |
| 3682.8 | 8.1 | 28.0 | 920.7 |
| 4051.1 | 8.1 | 28.0 | 1012.8 |
| 4085.0 | 8.1 | 28.0 | 1021.2 |
| 4059.9 | 8.0 | 28.0 | 1015.0 |
| 3591.5 | 7.6 | 28.0 | 897.9 |
| 3836.6 | 7.5 | 28.0 | 959.2 |
| 4069.4 | 7.3 | 27.6 | 1017.4 |
| 3893.6 | 7.3 | 27.5 | 973.4 |

⇧ MOST RECENT DATA

## FIG. 5A

## FIG. 5B

FIG. 5C

FIG. 5D

FIG. 6

$$COP^i = f(L^i、T_{WO}^i、T_{CWI}^i)$$

LOWER IN NUMBER OF DIMENSIONS

LOAD FACTOR 50% TO 60%

60

COP

COLD WATER OUTLET
TEMPERATURE $T_{WO}$

COOLING WATER INLET
TEMPERATURE $T_{CWI}$

LOAD FACTOR 60% TO 70%

60

COP

COLD WATER OUTLET
TEMPERATURE $T_{WO}$

COOLING WATER INLET
TEMPERATURE $T_{CWI}$

LOAD FACTOR 70% TO 80%

60

COP

COLD WATER OUTLET
TEMPERATURE $T_{WO}$

COOLING WATER INLET
TEMPERATURE $T_{CWI}$

FIG. 7

```
        ┌─────────────┐
        │    START    │
        └──────┬──────┘
               │              S110
        ┌──────▼──────────┐
        │ ACQUIRE CURRENT DATA │
        └──────┬──────────┘
               │              S120
        ┌──────▼──────────┐
        │ DERIVE MODEL COEFFICIENT │
        │ VALUE FOR EACH CHANGE    │
        │ FACTOR VARIABLE          │
        └──────┬──────────┘
               │              S130
        ┌──────▼──────────┐
        │   STORE MODEL    │
        │ COEFFICIENT VALUE │
        └──────┬──────────┘
               │
        ┌──────▼──────┐
        │     END     │
        └─────────────┘
```

FIG. 8

```
        ┌─────────────┐
        │    START    │
        └──────┬──────┘
               │              S210
        ┌──────▼──────────┐
        │ ACQUIRE CURRENT DATA │
        └──────┬──────────┘
               │              S220
        ┌──────▼──────────┐
   ┌───►│   READ MODEL     │
   │    │ COEFFICIENT VALUE │
   │    └──────┬──────────┘
   │           │              S230
   │    ┌──────▼──────────┐
   │    │ CALCULATE OPERATION │
   └────┤ SETTING VALUE       │
        └──────┬──────────┘
               │
        ┌──────▼──────┐
        │     END     │
        └─────────────┘
```

FIG. 9

SETTING VALUE CALCULATING DEVICE — 1a

EQUIPMENT STATE DATA
HEATING MEDIUM STATE DATA
OUTSIDE AIR STATE DATA
OPERATION CONDITIONS

DATA WRITING UNIT — 101

DATA STORAGE UNIT — 102

MODEL COEFFICIENT DERIVING UNIT — 103

MODEL COEFFICIENT CORRECTING UNIT — 111

MODEL COEFFICIENT STORAGE UNIT — 104

DISPLAY CONTROL UNIT — 112

SETTING VALUE CALCULATING UNIT — 105

OPERATION SETTING VALUE

FIG. 10

```
        ┌─────────────────┐
        │      START      │
        └─────────────────┘
                 │
                 ▼            ⟋S110
        ┌─────────────────┐
        │ ACQUIRE CURRENT DATA │
        └─────────────────┘
                 │
                 ▼            ⟋S120
        ┌─────────────────────┐
        │ DERIVE MODEL COEFFICIENT │
        │  VALUE FOR EACH CHANGE   │
        │    FACTOR VARIABLE       │
        └─────────────────────┘
                 │
                 ▼            ⟋S310
        ┌─────────────────┐
        │  CORRECT MODEL   │
        │ COEFFICIENT VALUE │
        │   IF NECESSARY    │
        └─────────────────┘
                 │
                 ▼            ⟋S140
        ┌─────────────────┐
        │   STORE MODEL    │
        │ COEFFICIENT VALUE │
        └─────────────────┘
                 │
                 ▼
        ┌─────────────────┐
        │       END       │
        └─────────────────┘
```

FIG. 11

START MODEL LEARNING

LOAD FACTOR 30% TO 40%

COP

COLD WATER OUTLET TEMPERATURE T$_{WO}$
COOLING WATER INLET TEMPERATURE T$_{CWI}$

60

LOAD FACTOR 40% TO 50%

COP

COLD WATER OUTLET TEMPERATURE T$_{WO}$
COOLING WATER INLET TEMPERATURE T$_{CWI}$

60

LOAD FACTOR 60% TO 70%

COP

COLD WATER OUTLET TEMPERATURE T$_{WO}$
COOLING WATER INLET TEMPERATURE T$_{CWI}$

60

LOAD FACTOR 70% TO 80%

COP

COLD WATER OUTLET TEMPERATURE T$_{WO}$
COOLING WATER INLET TEMPERATURE T$_{CWI}$

60

LOAD FACTOR 80% TO 90%

COP

COLD WATER OUTLET TEMPERATURE T$_{WO}$
COOLING WATER INLET TEMPERATURE T$_{CWI}$

60

LOAD FACTOR 90% TO 100%

COP

COLD WATER OUTLET TEMPERATURE T$_{WO}$
COOLING WATER INLET TEMPERATURE T$_{CWI}$

60

USE PREVIOUS MODEL COEFFICIENT

USE MODEL COEFFICIENT OF DIFFERENT LOAD FACTOR

CHANGE INPUT DATA

FIG. 12

SETTING VALUE CALCULATING DEVICE

EQUIPMENT STATE DATA
HEATING MEDIUM STATE DATA
OUTSIDE AIR STATE DATA
OPERATION CONDITIONS
(MINIMUM OPERATION/STOP TIME)

1b

121
DATA
WRITING
UNIT

122
DATA
STORAGE
UNIT

103
MODEL
COEFFICIENT
DERIVING UNIT

104
MODEL
COEFFICIENT
STORAGE UNIT

123
START/STOP
DETERMINING
UNIT

124
SETTING VALUE
CALCULATING
UNIT

OPERATION SETTING VALUE

EP 3 270 239 A1

## FIG. 13

CLASSIFY
ACCORDING
TO LOAD FACTOR

~70

~71

| DATE AND TIME |
| --- |
| – |
| 2014/3/28/0:22 |
| 2014/3/28/0:23 |
| 2014/3/28/0:24 |
| 2014/3/28/0:25 |
| 2014/3/28/0:26 |
| 2014/3/28/0:27 |
| 2014/3/28/0:28 |
| 2014/3/28/0:29 |
| 2014/4/2/9:15 |
| 2014/4/2/9:16 |
| 2014/4/2/9:17 |
| 2014/4/2/9:18 |
| 2014/4/2/9:19 |
| 2014/4/2/9:20 |
| 2014/4/2/9:21 |

⇧
MOST RECENT DATA

## FIG. 14

```
        ┌──────────────┐
        │    START     │
        └──────┬───────┘
               │            ╭S410
        ┌──────▼───────────┐
        │ ACQUIRE CURRENT DATA │
        └──────┬───────────┘
               │            ╭S120
        ┌──────▼───────────┐
        │ DERIVE MODEL COEFFICIENT │
        │ VALUE FOR EACH CHANGE │
        │ FACTOR VARIABLE │
        └──────┬───────────┘
               │            ╭S130
        ┌──────▼───────────┐
        │ STORE MODEL │
        │ COEFFICIENT VALUE │
        └──────┬───────────┘
               │
        ┌──────▼───────┐
        │     END      │
        └──────────────┘
```

## FIG. 15

```
        ┌──────────────┐
        │    START     │
        └──────┬───────┘
               │            ╭S210
        ┌──────▼───────────┐
        │ ACQUIRE CURRENT DATA │
        └──────┬───────────┘
               │            ╭S510
        ┌──────▼───────────┐
        │ DETERMINE WHETHER │
        │ TO START/STOP │
        └──────┬───────────┘
               │            ╭S520
        ┌──────▼───────────┐
        │ READ MODEL │
        │ COEFFICIENT VALUE │
        └──────┬───────────┘
               │            ╭S530
        ┌──────▼───────────┐
        │ CALCULATE OPERATION │
        │ SETTING VALUE │
        └──────┬───────────┘
               │
        ┌──────▼───────┐
        │     END      │
        └──────────────┘
```

EP 3 270 239 A1

## INTERNATIONAL SEARCH REPORT

International application No.

PCT/JP2016/054401

### A. CLASSIFICATION OF SUBJECT MATTER
G05B13/04(2006.01)i, F24F11/02(2006.01)i, G06N99/00(2010.01)i

According to International Patent Classification (IPC) or to both national classification and IPC

### B. FIELDS SEARCHED

Minimum documentation searched (classification system followed by classification symbols)
G05B13/04, F24F11/02, G06N99/00

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 6-82080 A (Matsushita Refrigeration Co.), 22 March 1994 (22.03.1994), | 1-2,4,7,9, 11-12 |
| A | paragraphs [0001], [0015] to [0028], [0037]; fig. 1 to 2 (Family: none) | 3,5-6,8,10 |
| Y | JP 6-174285 A (Takasago Thermal Engineering Co., Ltd.), | 1-2,4,7,9, 11-12 |
| A | 24 June 1994 (24.06.1994), paragraphs [0012] to [0013] (Family: none) | 3,5-6,8,10 |

[X] Further documents are listed in the continuation of Box C.    [ ] See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 11 April 2016 (11.04.16) | 19 April 2016 (19.04.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

29

**INTERNATIONAL SEARCH REPORT**

International application No.

PCT/JP2016/054401

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 58-107903 A  (Tokyo Shibaura Electric Co.,<br>Ltd.),<br>27 June 1983 (27.06.1983),<br>claim 1; page 2, lower left column, line 2 to<br>lower right column, line 18; page 3, upper<br>right column, lines 12 to 15<br>(Family: none) | 2,4<br>3,5-6 |
| Y | JP 2006-349302 A  (Toyo Standard Corp.),<br>28 December 2006 (28.12.2006),<br>paragraphs [0041] to [0042]<br>(Family: none) | 9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5320128 B